# EUROPEAN PATENT APPLICATION

(11) **EP 1 026 629 A2**
(43) Date of publication of application: **09.08.2000**
(21) Application number: 00200249.1
(22) Date of filing: 24.01.2000
(51) Int. Cl.: G06K 19/08

(54) **Forming user card images with encoded information**

(30) Priority: 05.02.1999 US 246082
(71) Applicant: EASTMAN KODAK COMPANY (a New Jersey corporation), Rochester, New York 14650 (US)
(72) Inventor: Paz-Pujalt, Gustavo Roberto, Rochester, New York 14650-2201 (US); Tsaur, Allen K., Rochester, New York 14650-2201 (US); Patton, David Lynn, Rochester, New York 14650-2201 (US)
(74) Representative: Lewandowsky, Klaus, Dipl.-Ing.

(57) **Abstract**

A method for producing a user card having two sides of information, which information includes pictorial and human readable text information and a machine readable code comprising the steps of storing a digitized image to be formed on the user card; providing in a digital format input text corresponding to human readable text and machine readable code; merging into the digitized image the digitized text and digitized machine readable code; using the merged digitized image, digitized text and digitized machine readable code to print pictorial and human readable text information onto areas of a photosensitive element corresponding to the two sides of the user card; and assembling at least two areas of the photosensitive element to form the user card having two sides which includes pictorial and human readable text information and the machine readable code.

## Description

The present invention relates to forming user cards containing encoded information containing images on image areas of a receiver

Heretofore images of high quality have been produced by cathode ray tube (CRT) printers such as Gretag Master Lab Digital wit a KODAK Digital Printer, The KODAK Large Format CRT Color Printer II, and the KODAK CRT Digital Color Printer. In a typical cathode ray tube printer an image is formed in three stages by illuminating the cathode ray tube with image information that has previously been color separated into its red, green, and blue (RGB) components. First a flash of the red portion of the image to be completed is placed in transfer relationship with a photo sensitized receiver, then a flash of the green portion of the image to be completed is placed in transfer relationship with a photo sensitized receiver, and finally a flash of the blue portion of the image to be completed is placed in transfer relationship with a photo sensitized receiver. The completed color image on the receiver is continuous tone and is of photographic quality. The operation of a monochrome CRT printer is described in US-A-4,688,104, and US-A-4,694,355, incorporated herein by reference. Image data digitally representing the features of a digital image of a cardholder or user have been described in commonly-assigned US-A-5,789,726.

It is an object of the present invention to produce a user card that can be used in applications such as personal identification cards, advertising cards, telephone cards, business cards, cartes-de-visite, souvenirs, admission tickets or the like.

Another object of the present invention is to encode information onto the card so that it can be read by an automated reader.

Yet another object of the invention is to tie the information onto a database

These objects are achieved in a method for producing a user card having two sides of information, which information includes pictorial and human readable text information and a machine readable code comprising the steps of:
(a) storing a digitized image to be formed on the user card;
(b) providing in a digital format input text corresponding to human readable text and machine readable code;
(c) merging into the digitized image the digitized text and digitized machine readable code;
(d) using the merged digitized image, digitized text and digitized machine readable code to print pictorial and human readable text information onto areas of a photosensitive element corresponding to the two sides of the user card; and
(e) assembling at least two areas of the photosensitive element to form the user card having two sides which includes pictorial and human readable text information and the machine readable code.
   FIG. 1 is a schematic of a CRT digital printer which can be used in making a user card accordance with the present invention;
   FIG. 2 is a schematic of a subjects image being captured using a conventional or electronic camera;
   FIG. 3 is a schematic of the image entry station and CRT printer which are used by the present invention;
   FIG. 4a illustrates a digital minilab printer that can be used in accordance with the present invention;
   FIG. 4b. is a schematic of a laser print engine used in a high speed digital minilab to expose photosensitive material;
   FIG. 5 illustrates an LED digital printer that can be used in accordance with the present invention;
   FIG. 6 is an enlarged perspective of the rotary printing system utilized in the LED digital printer of FIG. 5;
   FIG. 7 is a schematic of a user card containing encoded information and containing images;
   FIG. 8 is a schematic of a user card containing encoded information and containing images being formed into a double sided card using by folding;
   FIG. 9 is a schematic of a user card containing encoded information and containing images being formed into a double sided card using by cutting; and
   FIG. 10 is a flow chart illustrating the method of the present invention and showing how the data and image files are created and printed.

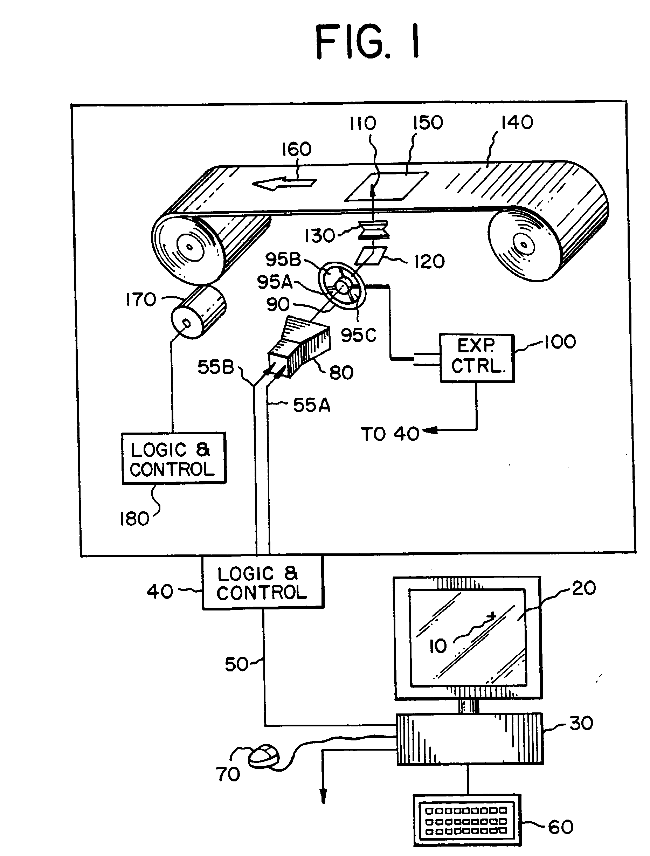

Referring to FIG. 1, a composed image 10 on a monitor 20 is sent by a computer 30 to CRT logic and control unit 40 via cable 50 using a key board 60 and/or a mouse 70. The composed image 10 is printed by passing the image signal from the logic and control unit 40 to a CRT 80 which produces an exposure 150 onto a photosensitive element in the form of a web 140. Signals to the CRT 80 are produced by cables 55A and 55B. Light from the CRT 80 passes through a filter wheel 90 controlled by exposure controller 100. The wheel 90 contains red 95A, green 95B, and blue 95C filters. Light which passes through the filter which is in a direction 110, and is reflected by a mirror 120 through a lens 130 onto the web 140. The images may or may not need to be inverted by the logic and control unit 40 depending on whether the mirror 120 is provided in the imaging path. An example of this type of printer is a KODAK CRT Digital Printer. The digital printing device can also be a laser, LCD, LED, or any other digital printing device and media known to those skilled in the art. After photographically recording the CRT exposure on the web 140, the web 140 advances in the direction 160 by a drive mechanism 170. The mechanism 170 is controlled by logic and control 180. The exposure 150 on the web 140 is then processed using a photographic processor as known by those skilled in the art.

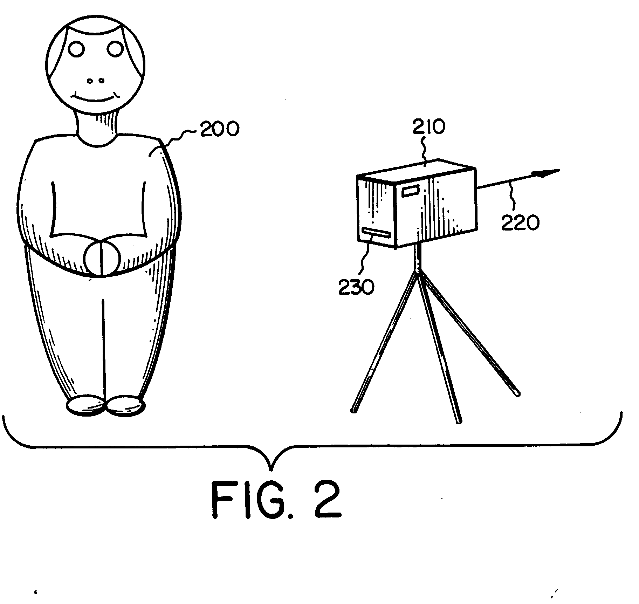

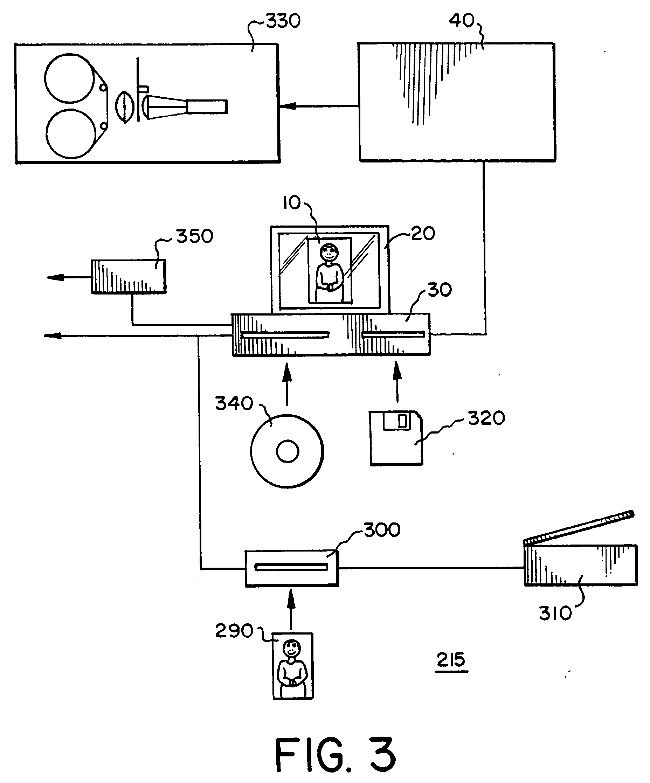

Now referring to FIG. 2, an image of a subject 200 is captured using an electronic camera 210 such as a KODAK DC 210 camera, the image is transmitted to the image and data entry station 215 shown in FIG. 3 via a cable 220, an RF link (not shown), or a compact flash memory card 230 or similar type memory capture devices known to those skilled in the art. By means of the image and data entry station 215 is shown in FIG. 3, the captured image is entered into the image and data entry station 215.

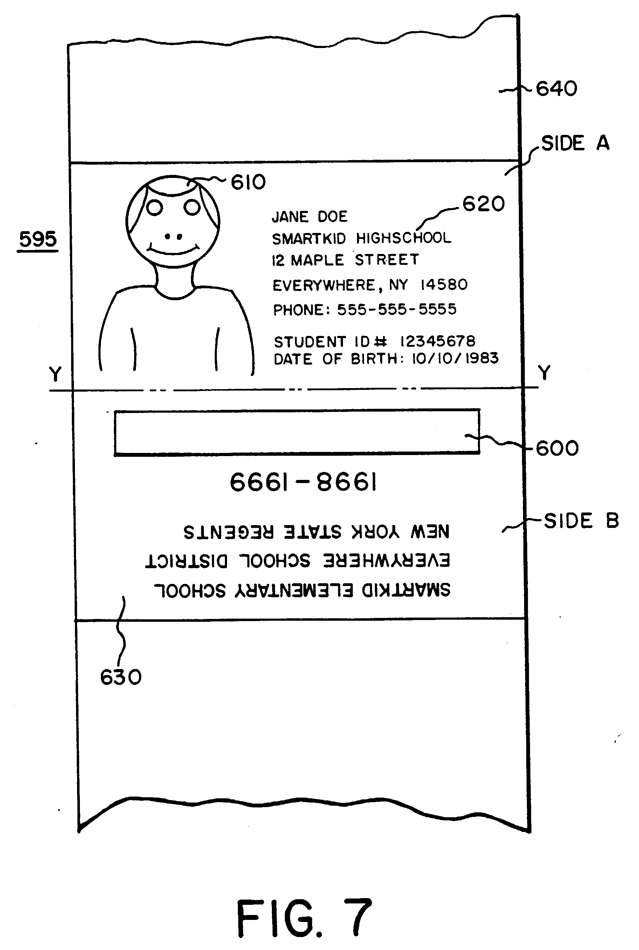

The image 290 can be entered via a print scanner 300, a flatbed scanner 310, a floppy disk 320, a CD-ROM 340, or other type of memory storage device such a an Iomega jaz drive known by those skilled in the art. After the image 290 has been entered, the composed image 10 (shown on the monitor 20) can be provided using the keyboard, mouse (not shown) and computer 30. Data to be associated with the composed image 10 can entered into computer 30 by the keyboard. These data can also be entered via a modem 350 or other Internet connection. The image and data entry station 215 shown in FIG. 3, digitizes and merges and the captured image and the data associated, then stores the digitized data in the computer 30. Encoded information 600 in the form of a machine readable code is created from the digitized data and the data is formatted to produce the user card 595 shown in FIG. 7 having two sides of information, which information includes a pictorial 610 and readable text 620 and encoded information 600. The image and its associated data are then printer using the CRT printer 330 of FIG. 1 under the control of the logic and control unit 40.

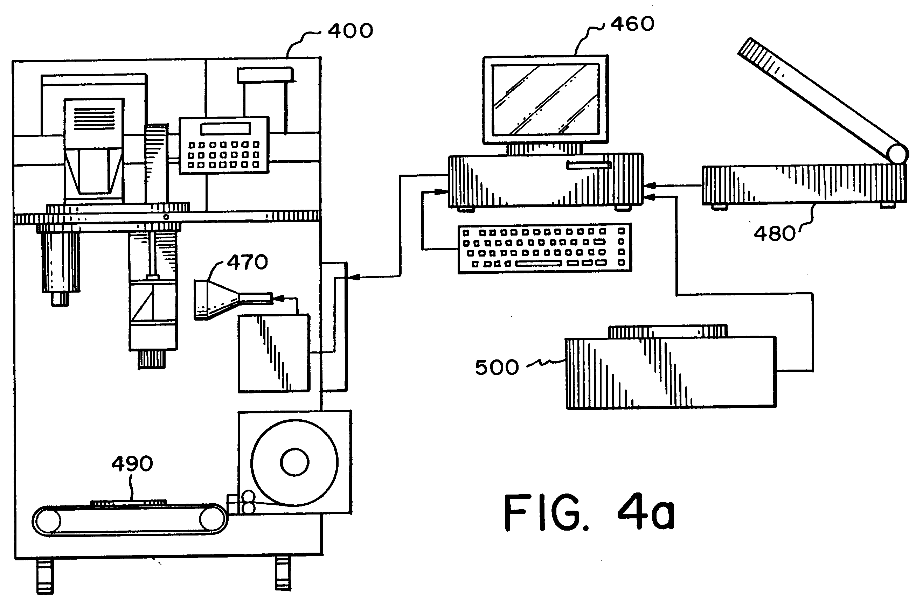

The image and its associated data can also be printed using a digital minilab. FIG. 4a illustrates a digital minilab printer such as the one used in a Gretag Imaging Masterlab 740 Digital with Kodak Digital Printer. In particular, this digital minilab printer 400 which can make a print from a digital record, uses the CRT printer which operates as described in FIG. 1. Here is also provided a CPU/computer 460 which is used to permit entry of data and control of the minilab printer 400. The CRT printer is provided with a cathode ray tube 470 which projects an image onto a photosensitive material 490, for example photosensitive paper which is then in term processed for development. It is, of course, understood that any other desired digital printing device my be utilized in the digital minilab printer 400, including, for example, but not by way of limitation, LEDs, lasers, electrophotographic, or other digital type printers. The system further includes a digital scanner 480 for scanning an image placed in the scanner and convening the information to a digital signal. An appropriate digital scanner that can be utilized is exemplified by the Hewlett Packard Scanjet IICX color scanner. Film negatives can also be scanned to obtain a digital record using a film scanner 500 exemplified by the KODAK DIGITAL SCIENCE Scanner 3500. After the digital record has been obtained, the digital record is transferred to the printer by the appropriate software previously provided in the computer 460 such that a print image can be made by the minilab printer 400. A suitable software package is sold by the Eastman Kodak Company under the Kodak Composite Machine trademark.

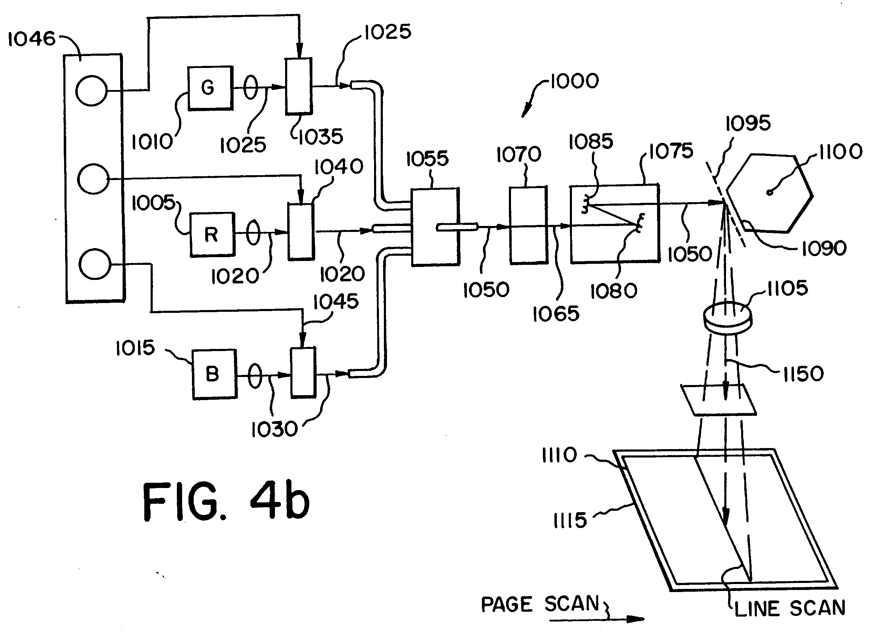

Now referring to FIG. 4b, a digital minilab can use a laser as a marking device. A laser printer 1000 is provided with a plurality of light sources 1005, 1010, and 1015. The light sources 1005, 1010, and 1015 are a laser sources that emit red, green, and blue wavelength light beams 1020, 1025, and 1030 respectively. These light beams are propagated to a plurality of acousto-optical modulators. In this embodiment the acousto-optical modulators 1035, 1040, and 1045 are used as light modulating means for modulating the light beams by image information supplied by the digital minilab's logic and control unit 1046. Acousto-optical modulators are well known devices. The modulated light beams are combined into a single light beam 1050 by an optical combiner such as a conventional fiber optic multiplexer 1055. The combined beam 1050 (of red, green, and blue components) exits the multiplexer 1055 (at the output end on the fiber) as a single light beam 1050 traveling along optical axis 1065 and is directed first towards an apochromatic focusing lens 1070, then to a single set of beam shaping objects 1075. The beam shaping optics 1075 includes two cylindrical mirrors 1080 and 1085. After being shaped by the shaping optics 1075, the single light beam 1050 is directed towards a polygon facet 1090. The polygon facet 1090 is located at or near the plane 1095. Although a rotating polygon deflector may be used in the invention, other deflectors may also be employed, so long as they are capable of deflecting the single light beam 1050 by a sufficient amount at the high speed required by the printer system. At the center of a scan line (here defined as 0° polygon rotation), the single light beam's 1050 angle of incidence on the polygon facet 1090 is 30 degrees. The single light beam 1050 striking the polygon facet 1090 and the single light beam 1050 reflected from the polygon facet 1090 form a plane which is normal to the direction of the polygon's axis of rotation 1100. Upon reflection from the polygon facet 1090, the deflected single light beam 1050 enters the scan lens 1105 as it is being scanned in a plane which is perpendicular to the axis of rotation 1100 of the polygon. After passing through the lens 1105, the deflected single light beam 1050 impinges on the photosensitive material 1110. In this embodiment the photosensitive material 1110 is a conventional photographic paper. The paper rests on a support 1115 which moves the paper in a predetermined direction. After exposure, the paper is processed for development.

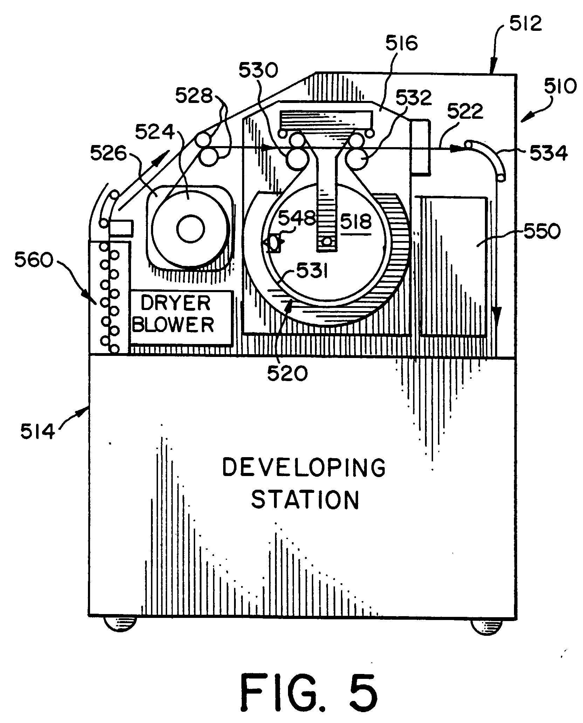

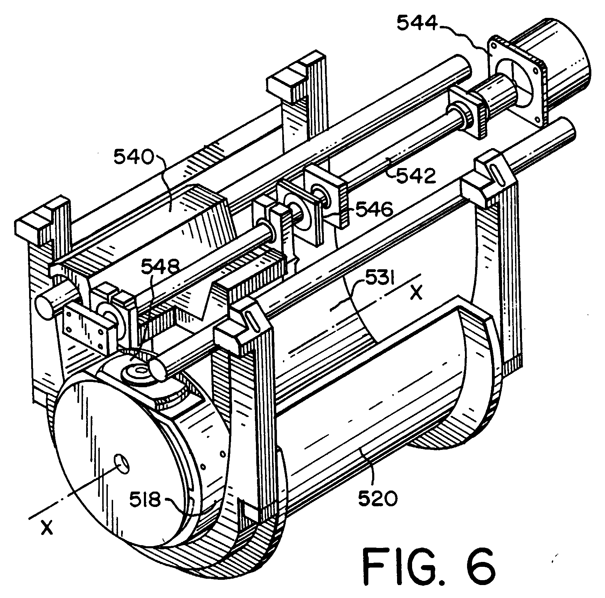

FIG. 5 illustrates an LED digital printer such as the one used in a KODAK PROFESSIONAL LED II PRINTER 20R & 20 P. Referring to FIGS. 5 and 6, there is illustrated a printing and developing apparatus 510. The apparatus 510 comprises a printing section 512 disposed above a developing section 514. In the printing section 512 a digital image is written onto photosensitive material 522, and in the developing section 514 the photosensitive material 522is developed such that when the print leaves the apparatus 510, a fully developed image is formed thereon.

The printing section 512 preferably includes an LED printing system. In particular, the printing section includes a rotary print system 516 which employs a digital multi-beam color exposure system, which is illustrated in greater detail in FIG. 6. In particular, the printing system 516 includes a rotor 518 which is coupled to a drive motor (not shown) for rotating the rotor 518 about longitudinal axis x-x. The rotor 518 is ranged to spin and move axially within a stationary cylindrical print shoe 520 which is provided with a sheet of photosensitive material 522. In the particular embodiment illustrated, the photosensitive material 522 is provided in a continuous roll 524 contained in a magazine 526 and is cut to the desired length by cutter 527 disposed after the shoe 520. A pair of guide rollers 528 is provided for guiding and driving of the photosensitive material 522 into the rotary print system. A pair of guide rollers 530 is provided in the print system 516 guiding the photosensitive material 522 to a shoe 520. An another pair of guide rollers 532 is provided for guiding the photosensitive sheet of material out of the shoe 520. The photosensitive material is guided in the direction of the developing section 514 by guide 534. An appropriate vacuum system (not shown) is provided such that the photosensitive material 522 is securely held firmly in place against the shoe surface 531 for allowing writing of the image by rotor 518. After the writing is complete, the vacuum is turned off to allow the sheet to be transported out of the shoe.

The rotor 518 is simultaneously rotated about axis x-x in a fast scan direction and translated along the longitudinal axis x-x of the shoe 520. Rotor 518 is attached to a linear translation assembly comprising a pedestal structure 538, a translator base 540, and a lead screw 542 being connected to the translator base by the coupler 546. The rotor 518 is simultaneously rotated by the drive motor (not shown) in the fast scan direction and is translated past the stationary print shoe 520 in a slow scan actual direction x-x about by stepper motor 544, lead screw 542, and coupling 546, thereby achieving a raster scan pattern on the photosensitive material being held within the shoe 520.

An LED printhead assembly 548 is mounted in the rotor 518 and comprises a plurality of mono-colored light sources, such as an array of LEDs 548. The operation of the LED printer array is described in commonly-assigned US-A-5,546,513, and US-A-5,606,358. The print head assembly is located within the body of the rotor 518 as illustrated in FIG. 5, with the LED package positioned so that the LED aperture output surface is located in a plane which is perpendicular to the optical axis of the projection lens assembly (not shown) for imaging onto the photosensitive material 522. The projection lens assembly is used to simultaneously image or focus all the LEDs 548 onto the surface located in close proximity above the outer surface of the rotor 518, and more particularly, onto the surface of the photosensitive material 522 held by the shoe 520. A single lens thereby images or focuses the plurality of LEDs 548 onto the photosensitive material 522 as a plurality of individual images which constitute the writing beam that exposes the image pixels. The LED printing system and processor are controlled by the logic and control unit 550

Once the photosensitive material obtained has been exposed with the desired image, the photosensitive material 522 is passed into the developing section 514 where it is developed and than dried in dryer assembly 560.

FIG. 7, shows a user card 595 containing encoded information 600, an image of a person 610, text 620 and graphics 630 as printer on a web 640 using a CRT printer such as a KODAK CRT Digital Printer.

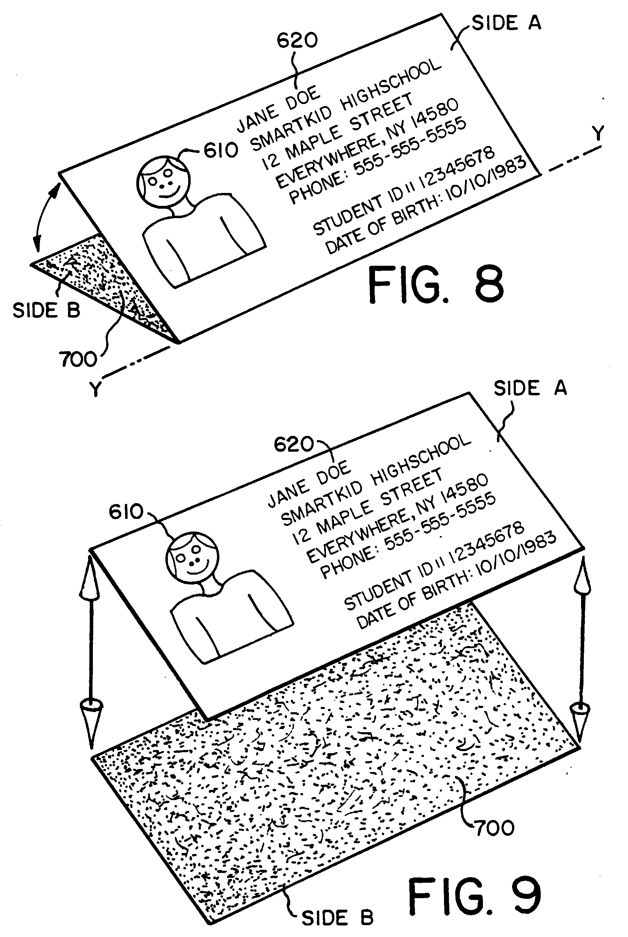

FIG. 8, shows the user card 595 with side A containing the image and side B containing the encoded information as shown in FIG. 7. The user card 595 is made by folding portions of the web 640 folded along the dotted line y-y (shown in FIG. 7). A double sided user card 595 is formed by applying adhesive 700 between the side A containing the image 610 and text 620 and side B containing the encoded information 600 and pressing the two sides together.

FIG. 9, shows the user card 595 with side A containing the image and side B containing the encoded information as shown in FIG. 7. The user card 595 is formed by cutting the web 640 along the dotted line y-y (shown in FIG. 7). A double sided user card 595 is formed by applying adhesive 700 between the side A containing the image 610 and text 620 and side B containing the encoded information 600 and pressing the two sides together.

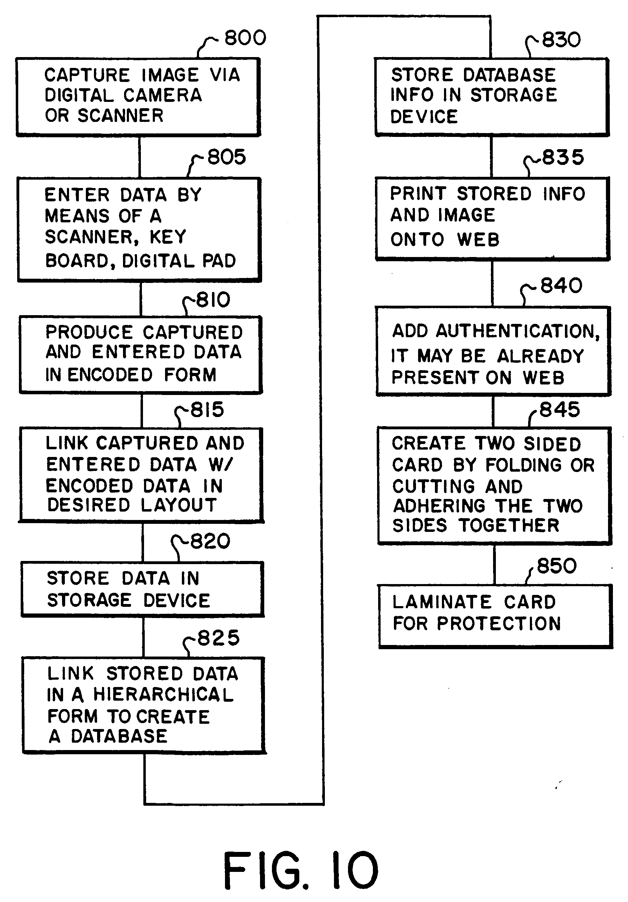

FIG. 10 which shows a flow chart for practicing the present invention showing a method for producing the user card 595 having two sides which together include pictorial 610 and text 620 and the encoded information 600 in a machine readable code such as a bar code. The flowchart includes block 800 which captures image information by a digital camera or scanner. Information is entered in block 805 by a keyboard or by scanning the information and processing it with optical character recognition (OCR) software to recognize the scanned information. Alternatively it can be entered by a digital notepad. Both the captured in and the data are merged and stored in the computer 30. In response to the information in blocks 800 or 805, block 810 produces encoded information 600 in the form of a bar code based on entered text information and producing encoded information 600 based on the compressed digital image. For an example of conventional algorithms used for compression of a digital image see for example commonly-assigned US-A-5,466,918. Block 815 merges and assembles the captured image, data and bar code and links the entered information with the captured image and with the encoded information in a desired format or layout. The assembled captured image, data and bar code are stored in a storage device 820. A database 825 is formed by linking the stored information in a hierarchical or relational form. Thereafter the database information is provided into a storage device 830. Block 835 shows the step of printing the stored information having a plurality of transferable image information into transferable relationship with photosensitive web 640. The photosensitive web 640 may contain pre-printed information for purposes of convenience or authentication. Alternatively as shown in block 840 authentication information may be provided in the firmware of the printer or it can be provided by embossing the image or adding an adhesive decal, hologram, or adding a smart card chip, or magnetic strip. The two-sided user card 595 as shown in block 845 is provided by forming two sides together. In order to protect the user card 595, one or both sides may be laminated with protective layer(s).

### PARTS LIST

- 10: composed image
- 20: monitor
- 30: computer
- 40: logic and control unit
- 50: cable
- 55a: cable
- 55b: cable
- 60: keyboard
- 70: mouse
- 80: CRT
- 90: filter wheel
- 95a: red filter
- 95b: green filter
- 95c: blue filter
- 100: exposure controller
- 110: direction
- 120: mirror
- 130: lens
- 140: web
- 150: exposure
- 160: direction
- 170: drive mechanism
- 180: logic and control
- 200: subject
- 210: electronic camera
- 215: image and data entry station
- 220: cable
- 230: memory card
- 290: image
- 300: print scanner
- 310: flatbed scanner
- 320: floppy disk
- 330: CRT printer
- 340: CD-ROM
- 350: modem
- 400: digital minilab printer
- 460: CPU/computer
- 470: cathode ray tube
- 480: digital scanner
- 490: photosensitive material
- 500: film scanner
- 510: printing and developing apparatus
- 512: printing section
- 514: developing section
- 516: rotary print system
- 518: rotor
- 518: rotor
- 520: print shoe
- 522: photosensitive material
- 524: continuous roll
- 526: magazine
- 527: cutter
- 528: guide rollers
- 530: guide rollers
- 531: shoe surface
- 532: guide rollers
- 534: guide
- 538: pedestal structure
- 540: translator base
- 542: lead screw
- 544: motor
- 546: coupler
- 548: printhead assembly
- 550: logic and control unit
- 560: dryer assembly
- 595: user card
- 595: user card
- 600: encoded information
- 610: image of person
- 620: text
- 630: graphics
- 640: web
- 700: adhesive
- 800: block
- 805: block
- 810: block
- 815: block
- 820: storage device
- 825: database
- 830: storage device
- 835: block
- 1000: laser printer
- 1005: light source
- 1010: light source
- 1015: light source
- 1020: light beam
- 1025: light beam
- 1030: light beam
- 1035: optical modulator
- 1040: optical modulator
- 1045: optical modulator
- 1046: logical and control unit
- 1050: single light beam
- 1050: combined beam
- 1055: multiplexer
- 1065: optical axis
- 1070: focusing lens
- 1075: beam shaping objects
- 1080: cylindrical mirror
- 1085: cylindrical mirror
- 1090: polygon facet
- 1095: plane
- 1100: axis of rotation
- 1105: scan lens
- 1110: photosensitive material
- 1115: support

## Claims

1. A method for producing a user card having two sides of information, which information includes pictorial and human readable text information and a machine readable code comprising the steps of:
(a) storing a digitized image to be formed on the user card;
(b) providing in a digital format input text corresponding to human readable text and machine readable code;
(c) merging into the digitized image the digitized text and digitized machine readable code;
(d) using the merged digitized image, digitized text and digitized machine readable code to print pictorial and human readable text information onto areas of a photosensitive element corresponding to the two sides of the user card; and
(e) assembling at least two areas of the photosensitive element to form the user card having two sides which includes pictorial and human readable text information and the machine readable code.

2. The method of claim 1 further including the step of laminating at least one side of the user card with a protective layer.

3. The method of claim 1 wherein photosensitive element is a photosensitive web and the two sides are formed as portions of the photosensitive web and the assembling step includes separating the two sides and attaching the separated sides to form the user card.

4. The method of claim 3 wherein the two sides are formed as portions of the photosensitive web adjacent to each other and the assembling step includes folding the adjacent two sides to form the user card.

5. The method of claim 1 wherein the printing step is performed by a CRT which exposes the photosensitive element.

6. The method of claim 1 wherein the machine readable code is a bar code.

7. The method of claim 1 wherein the digitized image is formed by capturing a digital image of a subject and is compressed by a compression algorithm.

8. The method of claim 1 wherein printing is accomplished by using a digital minilab.
